# EUROPÄISCHE PATENTANMELDUNG

(11) **EP 4 736 610 A1**
(43) Veröffentlichungstag der Anmeldung: **06.05.2026**
(21) Anmeldenummer: 24209918.2
(22) Anmeldetag: 30.10.2024
(51) Int. Cl.: A01B 63/00, A01B 63/16, B60B 35/10

(54) **ANORDNUNG FÜR EINE LANDWIRTSCHAFTLICHE ARBEITSMASCHINE, LANDWIRTSCHAFTLICHE ARBEITSMASCHINE SOWIE VERFAHREN ZUM EINSTELLEN EINER ACHSBREITE BEI EINER ANORDNUNG FÜR EINE LANDWIRTSCHAFTLICHE ARBEITSMASCHINE**

(71) Anmelder: Kverneland Group Soest GmbH, 59494 Soest (DE)
(72) Erfinder: Neumann, Björn, 59494 Soest (DE); Kottenstedde, Gregor, 59494 Soest (DE)
(74) Vertreter: Bittner, Thomas L.

(57) **Zusammenfassung**

Die Erfindung betrifft eine Anordnung für eine landwirtschaftliche Arbeitsmaschine mit: einer teleskopierbaren Radachse (1), für die eine erste Achsbreite und eine zweite Achsbreite einstellbar sind; einem ersten Radachsenbauteil (2) der teleskopierbaren Radachse (1), das eine hieran gebildete erste Aufnahme für eine erste Radnabe aufweist; einem zweiten Radachsenbauteil (3) der teleskopierbaren Radachse, das eine hieran gebildete zweite Aufnahme für eine zweite Radnabe aufweist, wobei ein proximaler Abschnitt (8) des ersten Radachsenbauteils (2) in das zweite Radachsenbauteil (3) eingesteckt ist, derart, dass in Längsrichtung der teleskopierbaren Radachse (1) eine Überlappung (6) zwischen dem ersten und dem zweiten Radachsenbauteil (2, 3) ausgebildet ist; und einem sich auf der teleskopierbaren Radachse (1) abstützenden Rahmenabschnitt (4) eines Hauptrahmens für eine landwirtschaftliche Arbeitsmaschine. Das erste Radachsenbauteil (2) ist in einem ersten Durchbruch (9) des Rahmenabschnitts (4) und das zweite Radachsenbauteil (3) in einem zweiten Durchbruch (11) des Rahmenabschnitts (4) sowie das erste und das zweite Radachsenbauteil (2, 3) relativ zueinander jeweils verlagerbar sind, derart, dass für die Überlappung (6) bei der ersten Achsbreite eine erste Überlappungslänge und bei der zweiten Achsbreite eine zweite Überlappungslänge ausbildbar ist, die von der ersten Überlappungslänge verschieden ist. Weiterhin sind eine landwirtschaftliche Arbeitsmaschine sowie ein Verfahren zum Einstellen einer Achsbreite bei einer Anordnung für eine landwirtschaftliche Arbeitsmaschine geschaffen.

## Beschreibung

Die Erfindung betrifft eine Anordnung für eine landwirtschaftliche Arbeitsmaschine und ein Verfahren zum Einstellen einer Achsbreite bei einer Anordnung für eine landwirtschaftliche Arbeitsmaschine sowie eine landwirtschaftliche Arbeitsmaschine.

### Hintergrund

Bei landwirtschaftlichen Arbeitsmaschinen kann eine längenveränderliche oder teleskopierbare Radachse vorgesehen sein, welches es ermöglicht, für die Radachse der landwirtschaftlichen Arbeitsmaschine unterschiedliche Achslängen oder -breiten einzustellen. Bei verschiedenen Achsbreiten weisen die an der Radachse beidseitig angeordneten Aufnahmen für eine jeweilige Radnabe einen unterschiedlichen Abstand auf.

Das Dokument DE 10 2022 107 359 A1 offenbart eine landwirtschaftliche Arbeitsmaschine, insbesondere zur Anlage, Bearbeitung und Pflege von landwirtschaftlichen Reihenkulturen, mit einem Maschinenrahmen, an dem ein Fahrwerk mit einer längenveränderlichen Radachse befestigt ist, wobei die Radachse ein Achsrohr aufweist, in welchem endseitig angeordnete Achsstummel mit daran angeordneten Radnaben in axialer Richtung relativ beweglich geführt und gleitend gelagert sind. Zum Verstellen der Achsstummel gegenüber dem Achsrohr sind Linearaktoren vorgesehen, wobei jeder Achsstummel eine zumindest einseitig zentrierende Außenkontur mit Zentrierfläche aufweist, die sich an Zentrierflächen einer korrespondierenden Innenkontur des Achsrohres abstützen. An den Zentrierflächen der Innenkontur des Achsrohres sind Gleitelemente angeordnet.

### Zusammenfassung

Aufgabe der Erfindung ist es, eine Anordnung für eine landwirtschaftliche Arbeitsmaschine und ein Verfahren zum Einstellen einer Achslänge oder -breite bei der Anordnung für die landwirtschaftliche Arbeitsmaschine sowie eine landwirtschaftliche Arbeitsmaschine anzugeben, bei denen die Achsbreite in einem größeren Bereich flexibel einstellbar ist.

Zur Lösung ist eine Anordnung für eine landwirtschaftliche Arbeitsmaschine nach dem unabhängigen Anspruch 1 geschaffen. Nebengeordnete Ansprüche 14 und 15 betreffen eine landwirtschaftliche Arbeitsmaschine sowie ein Verfahren zum Einstellen einer Achslänge oder -breite bei einer Anordnung für eine landwirtschaftliche Arbeitsmaschine. Weitere Ausgestaltungen sind Gegenstand von abhängigen Unteransprüchen.

Nach einem Aspekt ist eine Anordnung für eine landwirtschaftliche Arbeitsmaschine geschaffen, die Folgendes aufweist: eine teleskopierbare Radachse, für die eine erste Achslänge oder -breite und eine zweite Achslänge oder -breite einstellbar sind, die von der ersten Achsbreite oder-breite verschieden ist; ein erstes Radachsenbauteil der teleskopierbaren Radachse, das eine hieran gebildete erste Aufnahme für eine erste Radnabe aufweist, welche in einem distalen Endabschnitt des ersten Radachsenbauteils gebildet ist; ein zweites Radachsenbauteil der teleskopierbaren Radachse, das eine hieran gebildete zweite Aufnahme für eine zweite Radnabe aufweist, welche in einem distalen Endabschnitt des zweiten Radachsenbauteils gebildet ist, wobei ein proximaler Abschnitt des ersten Radachsenbauteils in das zweite Radachsenbauteil eingesteckt ist, derart, dass in Längsrichtung der teleskopierbaren Radachse eine Überlappung zwischen dem ersten und dem zweiten Radachsenbauteil ausgebildet ist; und ein sich auf der teleskopierbaren Radachse abstützender Rahmenabschnitt eines Hauptrahmens für eine landwirtschaftliche Arbeitsmaschine. Das erste Radachsenbauteil ist in einem ersten Durchbruch des Rahmenabschnitts verlagerbar. Das zweite Radachsenbauteil ist in einem zweiten Durchbruch des Rahmenabschnitts verlagerbar. Weiterhin sind das erste und das zweite Radachsenbauteil relativ zueinander verlagerbar. Mittels der jeweiligen Verlagerbarkeit ist für die Überlappung bei der ersten Achsbreite eine erste Überlappungslänge und bei der zweiten Achsbreite eine zweite Überlappungslänge ausbildbar, die von der ersten Überlappungslänge verschieden ist.

Nach einem weiteren Aspekt ist ein Verfahren zum Einstellen einer Achslänge oder -breite bei einer Anordnung für eine landwirtschaftliche Arbeitsmaschine geschaffen, wobei das Verfahren Folgendes aufweist: Bereitstellen einer teleskopierbaren Radachse, aufweisend ein erstes Radachsenbauteil, das eine hieran gebildete erste Aufnahme für eine erste Radnabe aufweist, welche in einem distalen Endabschnitt des ersten Radachsenbauteils gebildet ist; ein zweites Radachsenbauteil, das eine hieran gebildete zweite Aufnahme für eine zweite Radnabe aufweist, welche in einem distalen Endabschnitt des zweiten Radachsenbauteils gebildet ist. Bei dem Verfahren ist weiterhin Folgendes vorgesehen: Bereitstellen eines sich auf der teleskopierbaren Radachse abstützenden Rahmenabschnitts eines Hauptrahmens für eine landwirtschaftliche Arbeitsmaschine; Einstecken eines proximalen Abschnitts des ersten Radachsenbauteils in das zweite Radachsenbauteil, derart, dass eine Überlappung zwischen dem ersten und dem zweiten Radachsenbauteil ausgebildet wird; und Einstellen einer ersten Achsbreite und einer zweiten Achsbreite, die von der ersten Achsbreite verschieden ist, für die teleskopierbare Radachse, wobei hierbei das erste Radachsenbauteil in einem ersten Durchbruch des Rahmenabschnitts und das zweite Radachsenbauteil in einem zweiten Durchbruch des Rahmenabschnitts sowie das erste Radachsenbauteil und das zweite Radachsenbauteil relativ zueinander jeweils verlagert werden, derart, dass für die Überlappung für die erste Achsbreite eine erste Überlappungslänge und für die zweite Achsbreite eine zweite Überlappungslänge ausgebildet wird, die von der ersten Überlappungslänge verschieden ist.

Weiterhin ist eine landwirtschaftliche Arbeitsmaschine mit der vorgenannten Anordnung geschaffen.

Bei der längen- oder breitenveränderlichen oder teleskopierbaren Radachse sind das erste und das zweite Radachsenbauteil einerseits ineinandergesteckt, so dass die Überlappung ausgebildet ist, und andererseits jeweils relativ zu dem Rahmenabschnitt in dem jeweiligen zugeordneten Durchbruch verlagerbar aufgenommen. Somit sind die sich überlappenden Radachsenbauteile nicht nur relativ zueinander, sondern auch relativ zu dem sich auf der teleskopierbaren Radachse abstützenden Rahmenabschnitt des Hauptrahmens der landwirtschaftlichen Arbeitsmaschine verlager, wodurch ein erweiterter Einstellbereich für die Achslänge oder -breite der Radachse bereitgestellt ist. Insbesondere ist es so möglich, selbst bei einer Zwillingsbereifung auf beiden Seiten der teleskopierbaren Radachse einen möglichst kurzen Abstand zwischen den Radnaben einzustellen.

Der Rahmenabschnitt des Hauptrahmens der landwirtschaftlichen Arbeitsmaschine stützt sich sowohl auf dem ersten wie auch dem zweiten Radachsenbauteil ab, welche ihrerseits zum Einstellen der Achslänge oder -breite relativ zu dem Rahmenabschnitt verlager sind, wodurch die Überlappungslänge zwischen dem ersten und dem zweiten Radachsenbauteil veränderbar ist.

Der das erste Radachsenbauteil aufnehmende erste Durchbruch des Rahmenabschnitts und / oder der das zweite Radachsenbauteil aufnehmende zweite Durchbruch des Rahmenabschnitts können als ein offener oder ein geschlossener (vollständig umgreifend) ausgeführt sein.

Der teleskopierbaren Radachse kann eine Einstellvorrichtung zugeordnet sein, die eingerichtet ist, das erste und das zweite Radachsenbauteil zum Ausbilden der ersten und der zweiten Achsbreite relativ zueinander zu verlagern. Bei der Relativbewegung zwischen dem ersten und dem zweiten Radachsenbauteil sind sowohl das erste wie auch das zweite Radachsenbauteil relativ zum Rahmenabschnitt des Hauptrahmens verlagerbar, was mit Hilfe der Einstellvorrichtung bewirkt wird. In Abhängigkeit vom Anwendungsfall kann die Einstellvorrichtung eingerichtet sein, das erste und / oder das zweite Radachsenbauteil zum Einstellen einer gewünschten Achsbreite zu verlagern. Die Einstellvorrichtung kann mit einem oder mehreren Linearaktoren gebildet sein, beispielsweise Zylinderaktoren. Mittels der Relativverlagerung zwischen dem ersten und dem zweiten Radachsenbauteil wird die Überlappungslänge zwischen den beiden Radachsenbauteilen verändert, also eine Einstecklänge des proximalen Abschnitts des ersten Radachsenbauteils in dem zweiten Radachsenbauteil.

An dem Rahmenabschnitt kann Folgendes vorgesehen sein: eine erste Gleitfläche, mit der eine erste Auflage- oder Abstützfläche des Rahmenabschnitts auf dem ersten Radachsenbauteil im Bereich des ersten Durchbruchs vergrößert ist, derart, dass das erste Radachsenbauteil beim Verlagern relativ zum Rahmenabschnitt auf der ersten Gleitoberfläche gleitet oder rutscht; und / oder eine zweite Gleitoberfläche, mit der eine zweite Auflage- oder Abstützfläche des Rahmenabschnitts auf dem zweiten Radachsenbauteil im Bereich des zweiten Durchbruchs vergrößert ist, derart, dass das zweite Radachsenbauteil beim Verlagern relativ zum Rahmenabschnitt auf der zweiten Gleitoberfläche gleitet oder rutscht. Mit Hilfe der Gleitfläche ist die Abstützung des Rahmenabschnitts auf den Radachsenbauteilen erweiterbar. Darüber hinaus unterstützt die Gleitfläche das Gleiten oder Rutschen des jeweiligen Radachsenbauteils im Bereich des Durchbruchs und benachbart hierzu, wenn das erste und / oder das zweite Radachsenbauteils zum Einstellen der Achsbreite relativ zum Rahmenabschnitt verlagert werden.

Die erste und / oder die zweite Gleitfläche können an einer Stützplatte gebildet sein. Die Stützplatte kann mit der Gleitfläche ein oder mehrseitig an dem ersten und / oder dem zweiten Radachsenbauteil flächig anliegen. In einer Ausführungsform kann die Stützplatte das erste und / oder das zweite Radachsenbauteil zumindest teilweise umgreifen. Zwischen der Stützplatte im Bereich der Gleitfläche und der Oberfläche des jeweiligen Radachsenbauteils kann eine Formschlussverbindung ausgebildet sein. Die Stützplatte kann einseitig oder beidseitig auf gegenüberliegenden Seiten des Durchbruchs ausgebildet sein. In einer Ausführungsform ist die Stützplatte im Bereich des Durchbruchs an dem Rahmenabschnitts angeschweißt oder angeschraubt.

In einer weiteren Ausführungsform kann Folgendes vorgesehen sein: der erste Durchbruch ist in einer ersten Rahmenplatte gebildet, bei der eine erste Plattenfläche quer zur Längsrichtung der teleskopierbaren Radachse gestellt ist; und / oder der zweite Durchbruch ist in einer zweiten Rahmenplatte gebildet, die getrennt von der ersten Rahmenplatte gebildet ist und bei der eine zweite Plattenfläche quer zur Längsrichtung der teleskopierbaren Radachse gestellt ist. Mit der ersten und der zweiten Rahmenplatte kann eine jeweilige äußere Rahmenplatte des Rahmenabschnitts gebildet sein, durch welche sich hindurch die teleskopierbare Radachse erstreckt. Zwischen den äußeren Rahmenplatten können ein oder mehrere weitere Rahmenplatten angeordnet sein, deren Rahmenfläche sich quer zur Längsrichtung der teleskopierbaren Radachse erstreckt. Auf diese Weise können zum Beispiel ein oder mehrere mittlere Rahmenplatten vorgesehen sein.

Die Überlappung zwischen dem ersten und dem zweiten Radachsenbauteil kann im Bereich zwischen den äußeren Rahmenplatten ausgebildet sein, insbesondere ausschließlich in diesem Zwischenbereich.

Mehrere der Rahmenplatten können untereinander mittels einer Rahmenstange verbunden sein, die sich radial beabstandet zur teleskopierbaren Radachse und parallel zur Längsrichtung der teleskopierbaren Radachse erstreckt. Die Rahmenplatten können mit der sie verbindenden Rahmenstange fest verbunden sein, beispielsweise mittels Schweißverbindung.

Die Einstellvorrichtung, mit der das erste und das zweite Radachsenbauteil relativ zueinander verlagerbar sind, kann mit Aktoren gebildet sein, insbesondere Linearaktoren, die auf gegenüberliegenden Seiten einer mittleren Rahmenplatte angeordnet sind. Eine Seite der Aktoren kann mit der mittleren Rahmenplatte verbunden sein, derart, dass der Aktor sich auf der mittleren Rahmenplatte abstützt, so dass mittels Verlängerung oder Verkürzung der Aktorlänge das jeweilige Radachsenbauteil von der mittleren Radplatte weg oder zu dieser hin verlagerbar ist. Die Aktoren können sich hierzu durch eine zugeordnete Aktoröffnung in den äußeren oder außenliegenden Rahmenplatten erstrecken.

Der Rahmenabschnitt kann mindestens eine mittlere Rahmenplatte aufweisen, bei der eine Plattenfläche quer zur Längsrichtung der teleskopierbaren Radachse gestellt ist. Die Überlappung zwischen dem ersten und dem zweiten Radachsenbauteil kann sich durch einen Durchbruch in der mindestens einen mittleren Rahmenplatte erstrecken, zumindest dann, wenn die erste Achsbreite ausgebildet ist, alternativ auch wenn die erste und die zweite Achsbreite eingestellt sind.

Bei einer Ausführung der Anordnung ist vorgesehen, dass dem ersten Radachsenbauteil eine erste Anschlageinrichtung zugeordnet ist, die eingerichtet ist, einen ersten einstellbaren Anschlag bereitzustellen, welcher beim Ausbilden der ersten Achsbreite und der zweiten Achsbreite zur Sicherung einer relativen Lage zwischen der teleskopierbaren Radachse und dem Rahmenabschnitt jeweils an dem Rahmenabschnitt zum Anschlag kommt; und / oder dass dem zweiten Radachsenbauteil eine zweite Anschlageinrichtung zugeordnet ist, die eingerichtet ist, einen zweiten einstellbaren Anschlag bereitzustellen, welcher beim Ausbilden der ersten Achsbreite und der zweiten Achsbreite zur Sicherung einer relativen Lage zwischen der teleskopierbaren Radachse und dem Rahmenabschnitt jeweils an dem Rahmenabschnitt zum Anschlag kommt. Es kann vorgesehen sein, dass die Anschlageinrichtung zur Sicherung der relativen Lage benachbart zum jeweiligen Durchbruch in der Rahmenplatte an dem Rahmenabschnitt zur Auflage kommt.

Bei einer Ausführungsform der Anordnung kann weiterhin vorgesehen sein, dass die erste Anschlageinrichtung mit einem ersten Einstellbauteil gebildet ist, welches sich in Längsrichtung der teleskopierbaren Radachse erstreckt und an dem ein erstes Anschlagsbauteil zum Ausbilden des ersten einstellbaren Anschlags in unterschiedlichen Anschlagspositionen anordenbar ist; und / oder dass die zweite Anschlageinrichtung mit einem zweiten Einstellbauteil gebildet ist, welches sich in Längsrichtung der teleskopierbaren Radachse erstreckt und an dem ein zweites Anschlagsbauteil zum Ausbilden des zweiten einstellbaren Anschlags in unterschiedlichen Anschlagspositionen anordenbar ist. Das jeweilige Einstellbauteil kann mit einem Stabelement gebildet sein, welches sich in Längsrichtung der teleskopierbaren Achse erstreckt. Das Anschlagbauteil ist in den unterschiedlichen Anschlagspositionen lösbar oder verlagerbar an dem Einstellbauteil befestigt oder fixiert.

Eine Ausgestaltung der Anordnung sieht Folgendes vor: das erste Einstellbauteil erstreckt sich durch eine zugeordnete erste Plattenöffnung in der ersten Rahmenplatte, und das erste Anschlagsbauteil ist in Bezug auf die erste Rahmenplatte innenseitig angeordnet; und / oder das zweite Einstellbauteil erstreckt sich durch eine zugeordnete zweite Plattenöffnung in der zweiten Rahmenplatte, und das zweite Anschlagsbauteil ist in Bezug auf die zweite Rahmenplatte innenseitig angeordnet. Das Einstellbauteil kann formschlüssig in der zugeordneten Plattenöffnung aufgenommen sein, derart, dass das Einstellbauteil beim Einstellen der Achsbreite in der zugeordneten Plattenöffnung bewegbar ist.

Das erste Radachsenbauteil kann mit einem Achsrohr gebildet sein, in welches der proximale Abschnitt des zweiten Radachsenbauteils eingesteckt ist. Das zweite Radachsenbauteil kann in dem Achsrohr formschlüssig aufgenommen sein. Hierbei passt ein Außenprofil des zweiten Radachsenbauteils zum Innenprofil des Achsrohrs. Erstes und zweites Radachsenbauteil können im Querschnitt mit einem Mehreckprofil gebildet sein, insbesondere einem Dreieck- oder einem Viereckprofil.

Die die Auflagefläche vergrößernden Gleitflächen benachbart zu den Durchbrüchen, durch welche sich das erste und das zweite Radachsenbauteil erstrecken, können eingerichtet sein, das erste und / oder das zweite Radachsenbauteil in einem Eck- oder Kantenbereich beidseitig der Ecke / Kante mit dem Radachsenbauteil zu überlappen. Dies kann zum Beispiel mit einer gewinkelten Stützplatte ausgeführt sein.

Das Stabelement kann als ein Stabelement ausgeführt sein, zum Beispiel ein weiteres Achsrohr oder ein Profilstab.

Bei einer anderen Ausgestaltung der Anordnung kann Folgendes vorgesehen sein: die erste Aufnahme weist eine erste Halteeinrichtung auf, die einen ersten Achsstummel zum Aufnehmen der ersten Radnabe hält, wobei eine Längsrichtung des ersten Achsstummels parallel und in radialer Richtung versetzt zur Längsrichtung des ersten und des zweiten Radachsenbauteils angeordnet ist; und / oder die zweite Aufnahme weist eine zweite Halteeinrichtung auf, die einen zweiten Achsstummel zum Aufnehmen der zweiten Radnabe hält, wobei eine Längsrichtung des zweiten Achsstummels parallel und in radialer Richtung versetzt zur Längsrichtung des ersten und des zweiten Radachsenbauteils angeordnet ist. Mit Hilfe der Achsstummel ist es ermöglicht, im Bereich gegenüberliegender Endbereiche der teleskopierbaren Radachse die jeweilige Radnabe anzuordnen. Die Achsstummel sind jeweils getrennt vom zugeordneten Radachsenbauteil gebildet. Der Achsstummel kann relativ zum zugeordneten Radachsenbauteil fixiert oder verlagerbar sein, wobei Letzteres eine zusätzliche Möglichkeit zum Ändern der Achsbreite darstellen kann.

Eine Ausgestaltung der Anordnung kann Folgendes vorsehen: die erste Halteinrichtung ist mit ersten Halteplatten gebildet, deren Plattenfläche parallel zueinander und quer zur Längsrichtung der teleskopierbaren Radachse verlaufen, wobei sich das erste Radachsenbauteil durch eine Halteplattenöffnung in wenigstens einer der ersten Halteplatten und der erste Achsstummel durch eine Halteplattenöffnung in wenigstens einer anderen der ersten Halteplatten erstreckt; und / oder die zweite Halteinrichtung ist mit zweiten Halteplatten gebildet, deren Plattenfläche parallel zueinander und quer zur Längsrichtung der teleskopierbaren Radachse verlaufen, wobei sich das zweite Radachsenbauteil durch eine Halteplattenöffnung in wenigstens einer der zweiten Halteplatten und der zweite Achsstummel durch eine Halteplattenöffnung in wenigstens einer anderen der zweiten Halteplatten erstreckt.

Die ersten und / oder die zweiten Halteplatten können jeweils eine innere und eine äußere Halteplatte aufweisen, die in Bezug auf die Längsrichtung der teleskopierbaren Radachse innen- und außenliegend angeordnet sind. Das erste Radachsenbauteil erstreckt sich dann zumindest durch eine Halteplattenöffnung der innenliegenden Halteplatte, wohingegen sich der zugeordnete Achsstummel zumindest durch eine Halteplattenöffnung der außenliegenden Halteplatte erstreckt. Vergleichbar kann dies bei dem zweiten Radachsenbauteil vorgesehen sein. Es kann auch vorgesehen sein, dass sich Radachsenbauteil und / oder Achsstummel durch beide Halteplatten erstreckt, also innenliegende und außenliegende Halteplatten.

Bei der landwirtschaftlichen Arbeitsmaschine kann es sich zum Beispiel um eine Arbeitsmaschine aus der folgenden Gruppe handeln: Sämaschine, Spritzmaschine, Erntemaschine und Bodenbearbeitungsmaschine.

Sind auf der teleskopierbaren Radachse der landwirtschaftlichen Arbeitsmaschine beidseitig Räder mit Zwillingsbereifung angeordnet, kann die teleskopierbare Radachse eingerichtet sein, mittels Relativverlagerung zwischen dem ersten und dem zweiten Radachsenbauteil eine Achsbreite auszubilden, bei der eine Gesamtbreite, einschließlich der beidseitigen Zwillingsbereifung, nicht größer als 3m ist.

Ist die landwirtschaftliche Arbeitsmaschine als Sämaschine ausgebildet, kann diese eine sich quer zur Fahrtrichtung erstreckende Anordnung von nebeneinanderliegenden Säreihen aufweisen. Bei dieser Ausgestaltung kann vorgesehen sein, die Achsbreite für die teleskopierbare Radachse so einzustellen, dass die auf der teleskopierbaren Radachse angeordneten Räder in Bereichen zwischen benachbarten Säreihen angeordnet sind.

In Verbindung mit dem Verfahren zum Einstellen der Achsbreite der Anordnung für eine landwirtschaftliche Arbeitsmaschine können die vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine perspektivische Darstellung einer Anordnung mit einer teleskopierbaren Radachse für eine landwirtschaftliche Arbeitsmaschine;
- Fig. 2: eine weitere perspektivische Darstellung der Anordnung aus Fig. 1;
- Fig. 3: eine schematische Darstellung der Anordnung aus Fig. 1, wobei für die teleskopierbare Radachse ein erste Achsbreiten eingestellt ist;
- Fig. 4: eine schematische Darstellung der Anordnung aus Fig. 1, wobei für die teleskopierbare Radachse ein zweite Achsbreiten eingestellt ist;
- Fig. 5: eine perspektivische Darstellung eines ersten Radachsenbauteils einer teleskopierbaren Radachse und
- Fig. 6: eine schematische perspektivische Darstellung eines zweiten Radachsenbauteils für eine teleskopierbare Radachse.

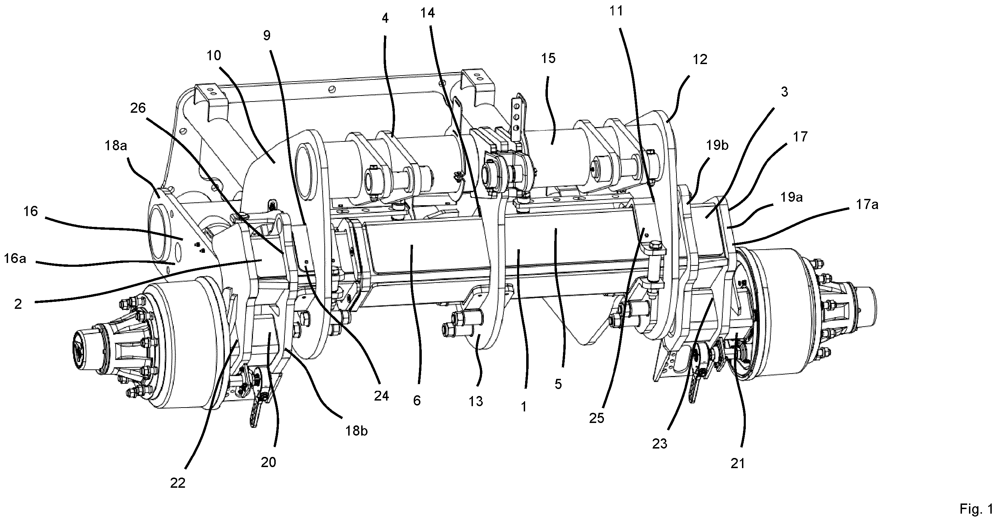

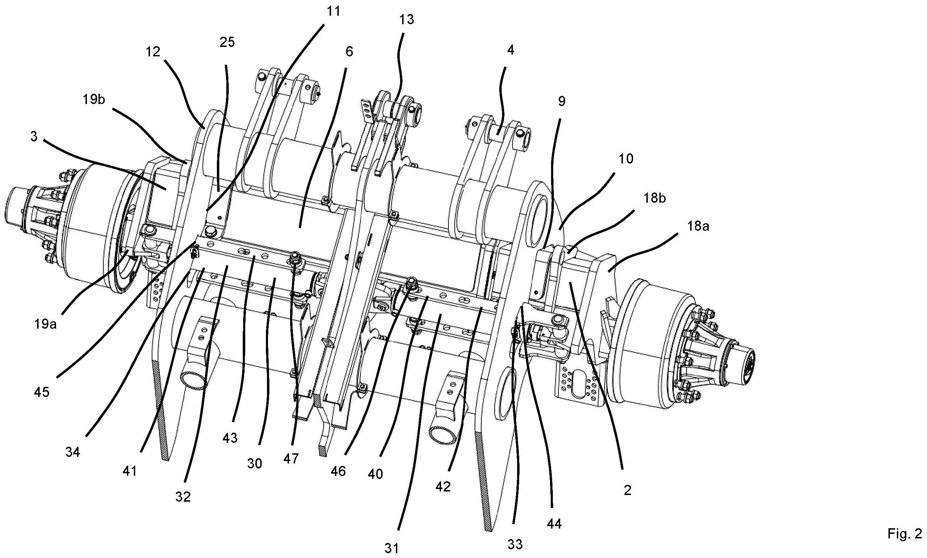

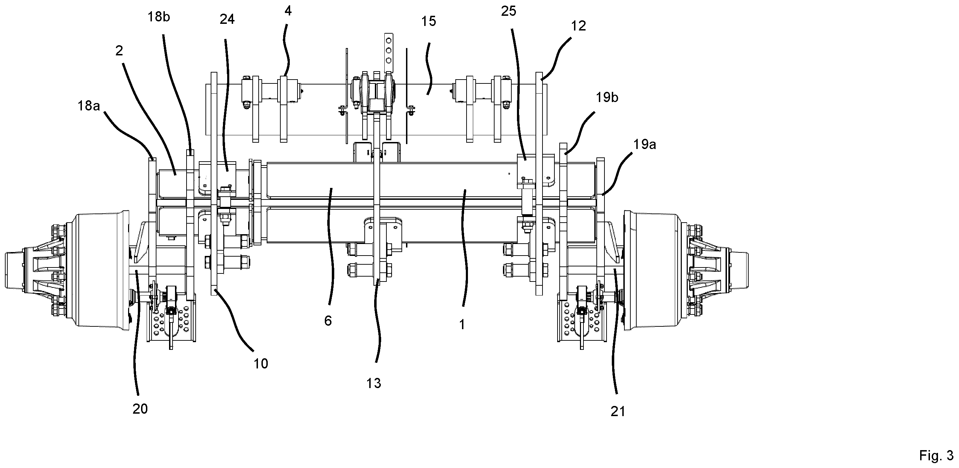

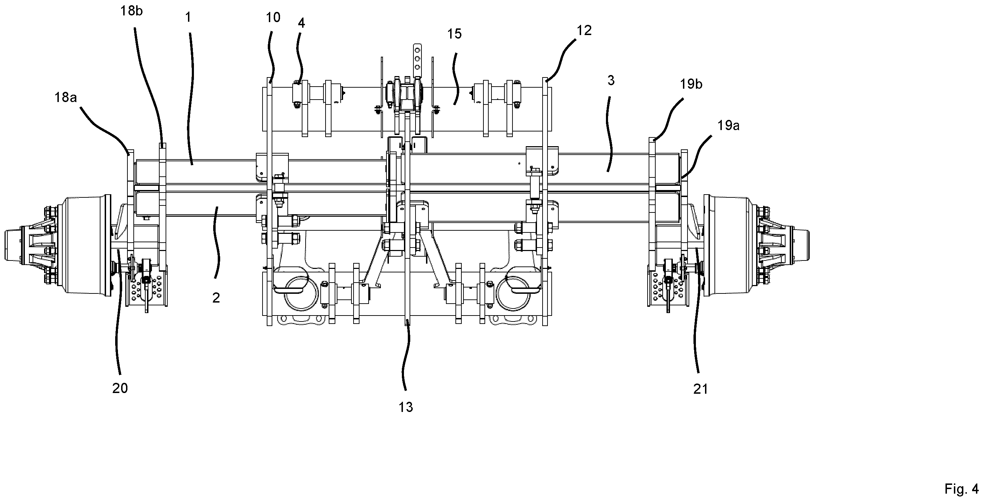

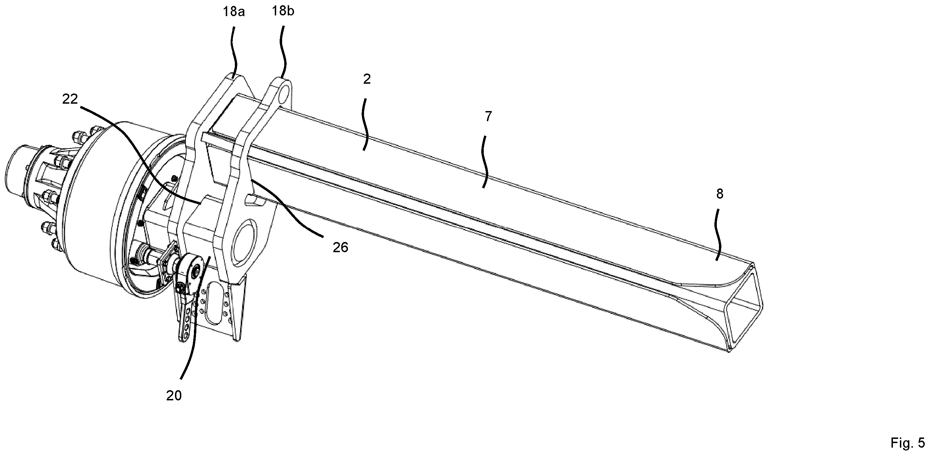

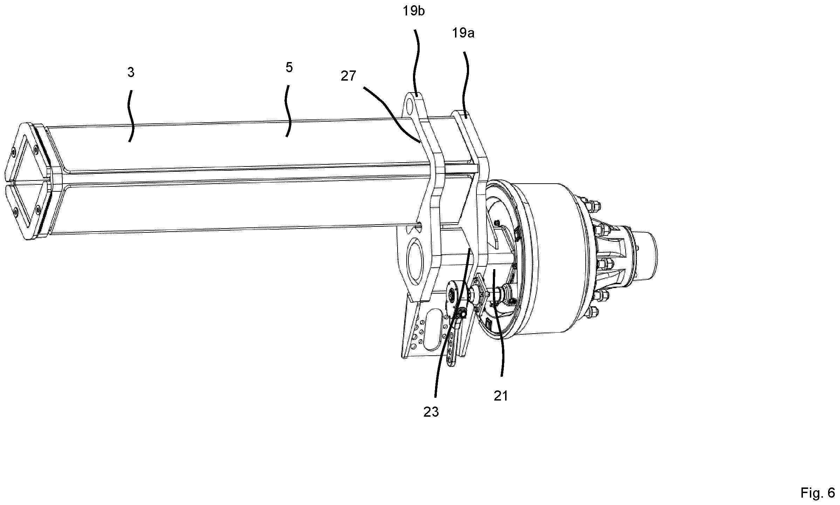

Fig. 1 und 2 zeigen schematische perspektivische Darstellungen einer Anordnung mit einer teleskopierbaren Radachse 1 für eine landwirtschaftliche Arbeitsmaschine, beispielsweise eine Sämaschine, eine Spritzmaschine, eine Erntemaschine oder eine Bodenbearbeitungsmaschine. Für die teleskopierbare Radachse 1 können unterschiedliche Achsbreiten oder -längen eingestellt werden, was in Fig. 3 und 4 für die Anordnung aus den Fig. 1 und 2 mit zwei verschiedenen Achsbreiten gezeigt ist. Die teleskopierbare Radachse 1 ist mit einem ersten Radachsenbauteil 2 und einem zweiten Radachsenbauteil 3 gebildet, die in den Fig. 5 und 6 jeweils gezeigt sind.

Gemäß den Fig. 1 bis 4 stützt sich auf der teleskopierbaren Radachse 1 ein Rahmenabschnitt 4 eines Hauptrahmens der landwirtschaftlichen Arbeitsmaschine ab. Das erste und das zweite Radachsenbauteil 2, 3 sind im zusammengebauten Zustand gemäß den Fig. 1 bis 4 ineinandergesteckt, wobei das erste Radachsenbauteil 2 in das zweite Radachsenbauteil 3, welches mit einem Achsrohr 5 gebildet ist, eingesteckt ist, so dass eine Überlappung 6 mit einer Überlappungslänge zwischen dem ersten und dem zweiten Radachsenbauteil 2, 3 ausgebildet ist. Gemäß Fig. 4 ist das erste Radachsenbauteil 2 mit einem Achsrohr 7 gebildet, welches im gezeigten Ausführungsbeispiel wie das Achsrohr 5 einen viereckigen Querschnitt aufweist. Beim Ineinanderstecken von erstem und zweitem Radachsenbauteil 2, 3 wird ein proximaler Abschnitt 8 des ersten Radachsenbauteils 2 in das Achsrohr 5 des zweiten Radachsenbauteils 3 eingesteckt.

Für die Überlappung 6 können gemäß den Fig. 3 und 4 unterschiedliche Überlappungslängen einstellt werden, wodurch die Achsbreite der teleskopierbaren Radachse 1 verändert wird. Die Achsbreite und somit die Überlappungslänge unterscheiden sich in den Fig. 3 und 4. Zum Verändern der Achsbreite können einerseits das erste und das zweite Radachsenbauteil 2, 3 relativ zueinander verlagert werden, in dem der proximale Abschnitt 8 des ersten Radachsenbauteils 2 mehr oder weniger in das Achsrohr 5 eingesteckt ist. Bei einer solchen Veränderung der Achsbreite können weiterhin das erste Radachsenbauteil 2 in einem ersten Durchbruch oder eine erste Öffnung 9 in einer ersten Rahmenplatte 10 des Rahmenabschnitts 1 sowie das zweite Radachsenbauteil 3 in einem zweiten Durchbruch 11 einer zweiten Rahmenplatte 12 verlagert werden, insbesondere mittels Rutschen oder Gleiten im zugeordneten Durchbruch.

Bei dem gezeigten Ausführungsbeispiel ist weiterhin eine mittlere Rahmenplatte 13 am Rahmenabschnitt 1 gebildet, die einen weiteren Durchbruch oder eine weitere Plattenöffnung 14 aufweist, durch welchen hindurch sich die Überlappung 6 bei den Achseinstellungen in den Fig. 3 und 4 erstreckt. Auch gegenüber der weiteren Plattenöffnung 14 sind erstes und zweites Radachsenbauteil 2, 3 beim Einstellen der Achsbreite verlagerbar. Die jeweiligen Plattenfläche der ersten Rahmenplatte 10, der zweiten Rahmenplatte 12 und der mittleren Rahmenplatte 13 erstrecken sich quer zur Längsrichtung der teleskopierbaren Radachse 1. Die Rahmenplatten 10, 12, 13 sind über eine Rahmenstange 15 miteinander verbunden, die im gezeigten Beispiel als Rohrstange ausgeführt ist. Die Rahmenstange 15 verläuft radial versetzt zur teleskopierbaren Radachse 1.

Das erste und das zweite Radachsenbauteil 2, 3 weisen endseitig eine erste und eine zweite Aufnahme 16, 17 für eine jeweilige Radnabe auf. Die erste und die zweite Aufnahme 16, 17 sind zum Bereitstellen einer ersten und einer zweiten Halteeinrichtung 16a, 17a mit einem Paar Halteplatten 18a, 18b, 19, 19b gebildet, deren Plattenfläche sich quer zur Längsrichtung der teleskopierbaren Radachse 1 erstreckt. An den Halteplatten 18a, 18b, 19, 19b ist ein jeweiliger Achsstummel 20, 21 durch zugeordnete Halteplattenöffnungen 22, 23 an der jeweils außenliegenden Halteplatte 18a, 19a geführt und hieran aufgenommen, wodurch der Achsstummel 20, 21 radial versetzt zur teleskopierbaren Radachse 1 gehalten und fixiert ist. Der jeweilige Achsstummel 20, 21 ist in seiner Relativlage zum zugeordneten Radachsenbauteil 2, 3 mit Hilfe des Paares von Halteplatten 18a, 18b, 19, 19b festgelegt. Es kann vorgesehen sein, dass die Achsstummel 20, 21 in Längsrichtung der teleskopierbaren Radachse 1 verlagerbar montiert sind.

An der ersten und der zweiten Rahmenplatte 10, 12 ist im Bereich der ersten und des zweiten Durchbruchs 9, 11 eine jeweilige Stützplatte 24, 25 angeordnet, die im gezeigten Beispiel gewinkelt ausgeführt ist. Mit Hilfe der Stützplatte 24, 25 wird jeweils eine Auflage- oder Stützfläche des Rahmenabschnitts 4 auf der teleskopierbaren Radachse 1 vergrößert.

An der innenliegenden Halteplatte 18b der ersten Halteeinrichtung 16a ist das erste Achsenbauteil 2 durch eine Halteplattenöffnung 26 gesteckt (vgl. Fig. 5). Das zweite Radachsenbauteil 3 ist an der innenliegenden Halteplatte 19b der zweiten Halteeinrichtung 17a durch eine Halteplattenöffnung 27 gesteckt (vgl. Fig. 6).

Um das erste und das zweite Radachsenbauteil 2, 3 zum Einstellen der Achsbreite relativ zum Rahmenabschnitt 4 und relativ zueinander zu verlagern, ist eine Einstellvorrichtung 30 vorgesehen, die bei der gezeigten Ausführungsform mit einem ersten und einem zweiten Linearaktor 31, 32 gebildet ist, die auf gegenüberliegenden Seiten der mittleren Rahmenplatte 13 abstützend montiert sind. Der erste und der zweite Linearaktor 31, 32 erstrecken sich im Wesentlichen parallel zur Längsrichtung der teleskopierbaren Radachse 1 und können jeweils unterschiedliche Aktorlängen annehmen, wobei die Linearaktoren 31, 32 zur Längeneinstellung unabhängig voneinander ansteuerbar sind. Bei dem ersten und dem zweiten Linearaktor 31, 32 kann es sich beispielsweise um einen elektrischen, hydraulischen oder pneumatischen Zylinderaktor handeln. Mittels Längenänderung des ersten und des zweiten Linearaktors 31, 32 werden das erste und das zweite Radachsenbauteil 2, 3 relativ zueinander sowie relativ zum Rahmenabschnitt 4 verlagert, um eine gewünschte Achsbreite einzustellen.

Der erste und der zweite Linearaktor 31, 32 erstrecken sich durch ein erste und eine zweite Plattenöffnung 33, 34 in der ersten und der zweiten Rahmenplatte 10, 12 (vgl. Fig. 2).

Zum Festlegen der Achsbreite sind eine erste und eine zweite Anschlageinrichtung 40, 41 vorgesehen, die mit einem jeweiligen Einstellbauteil 42, 43 gebildet sind, welches sich im gezeigten Beispiel in Längsrichtung der teleskopierbaren Radachse 1 erstreckt und durch eine jeweils zugeordneten Plattenöffnung 44, 45 in der ersten und der zweiten Halteplatte 10, 12 erstreckt, so dass sich das Einstellbauteil im zugeordneten Durchbruch 44, 45 bei der Achsbreiteneinstellung verlagern kann. Diese Verlagerung wird mittels eines jeweiligen Anschlagbauteils 46, 47 begrenzt, welches auf dem Einstellbauteil 42, 43 in unterschiedlichen Positionen anordenbar ist, um unterschiedliche Anschlagslängen einzustellen. Bei Erreichen der gewünschten Achsbreite oder -länge kommt das Anschlagbauteil 46, 47 auf einer Innenseite der ersten und der zweiten Rahmenplatte 10, 12 zum Anschlag.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung für eine landwirtschaftliche Arbeitsmaschine, mit:
- einer teleskopierbaren Radachse (1), für die eine erste Achsbreite und eine zweite Achsbreite einstellbar sind, die von der ersten Achsbreite verschieden ist;
- einem ersten Radachsenbauteil (2) der teleskopierbaren Radachse (1), das eine hieran gebildete erste Aufnahme für eine erste Radnabe aufweist, welche in einem distalen Endabschnitt des ersten Radachsenbauteils (2) gebildet ist;
- einem zweiten Radachsenbauteil (3) der teleskopierbaren Radachse, das eine hieran gebildete zweite Aufnahme für eine zweite Radnabe aufweist, welche in einem distalen Endabschnitt des zweiten Radachsenbauteils (3) gebildet ist, wobei ein proximaler Abschnitt (8) des ersten Radachsenbauteils (2) in das zweite Radachsenbauteil (3) eingesteckt ist, derart, dass in Längsrichtung der teleskopierbaren Radachse (1) eine Überlappung (6) zwischen dem ersten und dem zweiten Radachsenbauteil (2, 3) ausgebildet ist; und
- einem sich auf der teleskopierbaren Radachse (1) abstützenden Rahmenabschnitt (4) eines Hauptrahmens für eine landwirtschaftliche Arbeitsmaschine;
wobei das erste Radachsenbauteil (2) in einem ersten Durchbruch (9) des Rahmenabschnitts (4) und das zweite Radachsenbauteil (3) in einem zweiten Durchbruch (11) des Rahmenabschnitts (4) sowie das erste und das zweite Radachsenbauteil (2, 3) relativ zueinander jeweils verlagerbar sind, derart, dass für die Überlappung (6) bei der ersten Achsbreite eine erste Überlappungslänge und bei der zweiten Achsbreite eine zweite Überlappungslänge ausbildbar ist, die von der ersten Überlappungslänge verschieden ist.

2. Anordnung nach Anspruch 1, dadurch **gekenn*z*eichnet**, dass der teleskopierbaren Radachse (1) eine Einstellvorrichtung (30) zugeordnet ist, die eingerichtet ist, das erste und das zweite Radachsenbauteil (2, 3) zum Ausbilden der ersten und der zweiten Achsbreite relativ zueinander zu verlagern.

3. Anordnung nach Anspruch 1 oder 2, **dadurch gekennzeichnet, dass** an dem Rahmenabschnitt (4) Folgendes vorgesehen ist:
- eine erste Gleitfläche, mit der eine erste Auflagefläche des Rahmenabschnitts (4) auf dem ersten Radachsenbauteil (2) im Bereich des ersten Durchbruchs (9) vergrößert ist, derart, dass das erste Radachsenbauteil (2) beim Verlagern relativ zum Rahmenabschnitt (4) auf der ersten Gleitoberfläche gleitet; und / oder
- eine zweite Gleitoberfläche, mit der eine zweite Auflagefläche des Rahmenabschnitts (4) auf dem zweiten Radachsenbauteil (3) im Bereich des zweiten Durchbruchs (11) vergrößert ist, derart, dass das zweite Radachsenbauteil (3) beim Verlagern relativ zum Rahmenabschnitt (4) auf der zweiten Gleitoberfläche gleitet.

4. Anordnung nach Anspruch 3, **dadurch gekennzeichnet, dass** die erste und / oder die zweite Gleitfläche an einer Stützplatte (24; 25) gebildet ist.

5. Anordnung nach mindestens einem der vorangehenden Ansprüche, **dadurch gekennzeichnet, dass** Folgendes vorgesehen ist:
- der erste Durchbruch (9) ist in einer ersten Rahmenplatte (10) gebildet, bei der eine erste Plattenfläche quer zur Längsrichtung der teleskopierbaren Radachse (1) gestellt ist; und / oder
- der zweite Durchbruch (11) ist in einer zeiten Rahmenplatte (12) gebildet, die getrennt von der ersten Rahmenplatte (10) gebildet ist und bei der eine zweite Plattenfläche quer zur Längsrichtung der teleskopierbaren Radachse (1) gestellt ist.

6. Anordnung nach mindestens einem der vorangehenden Ansprüche, **dadurch gekennzeichnet, dass** der Rahmenabschnitt (4) mindestens eine mittlere Rahmenplatte (13) aufweist, bei der eine Plattenfläche quer zur Längsrichtung der teleskopierbaren Radachse (1) gestellt ist.

7. Anordnung nach mindestens einem der vorangehenden Ansprüche, **dadurch gekennzeichnet, dass**
- dem ersten Radachsenbauteil (2) eine erste Anschlageinrichtung zugeordnet ist, die eingerichtet ist, einen ersten einstellbaren Anschlag bereitzustellen, welcher beim Ausbilden der ersten Achsbreite und der zweiten Achsbreite zur Sicherung einer relativen Lage zwischen der teleskopierbaren Radachse (1) und dem Rahmenabschnitt (4) jeweils an dem Rahmenabschnitt (4) zum Anschlag kommt; und / oder
- dem zweiten Radachsenbauteil eine zweite Anschlageinrichtung zugeordnet ist, die eingerichtet ist, einen zweiten einstellbaren Anschlag bereitzustellen, welcher beim Ausbilden der ersten Achsbreite und der zweiten Achsbreite zur Sicherung einer relativen Lage zwischen der teleskopierbaren Radachse (1) und dem Rahmenabschnitt (4) jeweils an dem Rahmenabschnitt (4) zum Anschlag kommt.

8. Anordnung nach Anspruch 7, **dadurch gekennzeichnet, dass**
- die erste Anschlageinrichtung mit einem ersten Einstellbauteil (42) gebildet ist, welches sich in Längsrichtung der teleskopierbaren Radachse (1) erstreckt und an dem ein erstes Anschlagsbauteil (46) zum Ausbilden des ersten einstellbaren Anschlags in unterschiedlichen Anschlagspositionen anordenbar ist; und / oder
- die zweite Anschlageinrichtung mit einem zweiten Einstellbauteil (43) gebildet ist, welches sich in Längsrichtung der teleskopierbaren Radachse (1) erstreckt und an dem ein zweites Anschlagsbauteil (47) zum Ausbilden des zweiten einstellbaren Anschlags in unterschiedlichen Anschlagspositionen anordenbar ist.

9. Anordnung nach Anspruch 5 und Anspruch 8, dadurch ge **kennzeichnet,** dass Folgendes vorgesehen ist:
- das erste Einstellbauteil (42) erstreckt sich durch eine zugeordnete erste Plattenöffnung (44) in der ersten Rahmenplatte (10), und das erste Anschlagsbauteil (46) ist in Bezug auf die erste Rahmenplatte (10) innenseitig angeordnet; und / oder
- das zweite Einstellbauteil (43) erstreckt sich durch eine zugeordnete zweite Plattenöffnung (45) in der zweiten Rahmenplatte (12), und das zweite Anschlagsbauteil (46) ist in Bezug auf die zweite Rahmenplatte (12) innenseitig angeordnet.

10. Anordnung nach mindestens einem der vorangehenden Ansprüche, **dadurch gekennzeichnet, dass** erste Radachsenbauteil (2) mit einem Achsrohr (5) gebildet ist, in welches der proximale Abschnitt (8) des zweiten Radachsenbauteils (3) eingesteckt ist.

11. Anordnung nach mindestens einem der vorangehenden Ansprüche, **dadurch gekennzeichnet, dass** zweite Radachsenbauteil (3) als ein Stabelement gebildet ist.

12. Anordnung nach mindestens einem der vorangehenden Ansprüche, **dadurch gekennzeichnet, dass** Folgendes vorgesehen ist:
- die erste Aufnahme weist eine erste Halteeinrichtung (16a) auf, die einen ersten Achsstummel (20) zum Aufnehmen der ersten Radnabe hält, wobei eine Längsrichtung des ersten Achsstummels (20) parallel und in radialer Richtung versetzt zur Längsrichtung des ersten und des zweiten Radachsenbauteils (2, 3) angeordnet ist; und / oder
- die zweite Aufnahme weist eine zweite Halteeinrichtung (17a) auf, die einen zweiten Achsstummel (21) zum Aufnehmen der zweiten Radnabe hält, wobei eine Längsrichtung des zweiten Achsstummels (21) parallel und in radialer Richtung versetzt zur Längsrichtung des ersten und des zweiten Radachsenbauteils (2, 3) angeordnet ist.

13. Anordnung nach Anspruch 12, **dadurch gekennzeichnet, dass** Folgendes vorgesehen ist:
- die erste Halteinrichtung (16a) ist mit ersten Halteplatten (18a, 18b) gebildet, deren Plattenfläche parallel zueinander und quer zur Längsrichtung der teleskopierbaren Radachse (1) verlaufen, wobei sich das erste Radachsenbauteil (2) durch eine Halteplattenöffnung (26) in wenigstens einer der ersten Halteplatten (18b) und der erste Achsstummel (20) durch eine Halteplattenöffnung (22) in wenigstens einer anderen der ersten Halteplatten (18a) erstreckt; und / oder
- die zweite Halteinrichtung (17a) ist mit zweiten Halteplatten (19a, 19b) gebildet, deren Plattenfläche parallel zueinander und quer zur Längsrichtung der teleskopierbaren Radachse (1) verlaufen, wobei sich das zweite Radachsenbauteil (3) durch eine Halteplattenöffnung (27) in wenigstens einer der zweiten Halteplatten (19b) und der zweite Achsstummel (21) durch eine Halteplattenöffnung (23) in wenigstens einer anderen der zweiten Halteplatten (19a) erstreckt.

14. Landwirtschaftliche Arbeitsmaschine, mit einer Anordnung nach mindestens einem der vorangehenden Ansprüche.

15. Verfahren zum Einstellen einer Achsbreite bei einer Anordnung für eine landwirtschaftliche Arbeitsmaschine, mit:
- Bereitstellen einer teleskopierbaren Radachse (1), aufweisend
- ein erstes Radachsenbauteil (2), das eine hieran gebildete erste Aufnahme für eine erste Radnabe aufweist, welche in einem distalen Endabschnitt des ersten Radachsenbauteils (2) gebildet ist;
- ein zweites Radachsenbauteil (3), das eine hieran gebildete zweite Aufnahme für eine zweite Radnabe aufweist, welche in einem distalen Endabschnitt des zweiten Radachsenbauteils (3) gebildet ist; und
- Bereitstellen eines sich auf der teleskopierbaren Radachse (1) abstützenden Rahmenabschnitts (4) eines Hauptrahmens für eine landwirtschaftliche Arbeitsmaschine;
wobei das Verfahren weiterhin Folgendes aufweist:
- Einstecken eines proximalen Abschnitts (8) des ersten Radachsenbauteils (2) in das zweite Radachsenbauteil (2), derart, dass eine Überlappung (6) zwischen dem ersten und dem zweiten Radachsenbauteil (2, 3) ausgebildet wird; und
- Einstellen einer ersten Achsbreite und einer zweiten Achsbreite, die von der ersten Achsbreite verschieden ist, für die teleskopierbare Radachse (1), wobei hierbei das erste Radachsenbauteil (2) in einem ersten Durchbruch (9) des Rahmenabschnitts (4) und das zweite Radachsenbauteil (3) in einem zweiten Durchbruch (11) des Rahmenabschnitts (4) sowie das erste Radachsenbauteil (2) und das zweite Radachsenbauteil (3) relativ zueinander jeweils verlagert werden, derart, dass für die Überlappung (6) für die erste Achsbreite eine erste Überlappungslänge und für die zweite Achsbreite eine zweite Überlappungslänge ausgebildet wird, die von der ersten Überlappungslänge verschieden ist.
